# EUROPEAN PATENT SPECIFICATION

(11) **EP 0 809 909 B1**
(45) Date of publication and mention of the grant of the patent: **20.04.2005**
(21) Application number: 96938407.2
(22) Date of filing: 27.11.1996
(51) Int. Cl.: H04M 15/00, H04M 3/42

(54) **BILLING AND SERVICE ARRANGEMENTS, IN A TELECOMMUNICATION NETWORK, FOR PROVIDING VALVE ADDED SERVICES**
GEBÜHRENERFASSUNGS- UND DIENSTEINRICHTUNGEN IN EINEM TELEKOMMUNIKATIONSNETZWERK ZUR LIEFERUNG VON MEHRWERTDIENSTEN
DISPOSITIF DE PRESTATIONS DE SERVICES DANS UN RESEAU DE TELECOMMUNICATIONS, DESTINE A FOURNIR DES SERVICES A VALEUR AJOUTEE

(30) Priority: 19.12.1995 EP 95203551
(43) Date of publication of application: 03.12.1997
(73) Proprietor: Koninklijke Philips Electronics N.V., 5621 BA Eindhoven (NL)
(72) Inventor: VRIENS, Leonarda, Johanna, Maria, NL-5656 AA Eindhoven (NL)
(74) Representative: Mak, Theodorus Nicolaas
(86) International application number: PCT/IB1996/001319
(87) International publication number: WO 1997/023084

(56) References cited:
- EP-A- 0 491 497
- WO-A-96/03000
- US-A- 4 852 154
- US-A- 5 148 474

## Description

The present invention relates to a telecommunication network comprising a service providing arrangement for providing services and a billing arrangement for establishing a connection charge to be paid to a network operator of the telecommunication network for a connection between a terminal, which is connectable to the telecommunication network, and the service providing arrangement service providing arrangement to be used in a telecommunication network and arranged for providing services. Such a telecommunication network is for example the generally known public telephony network. In this network the service providing arrangement can be reached over specific telephone numbers. Via each telephone number a specific value added service can be obtained. Examples of such services are: the latest sports news, the weather, telephonic dating, etc. The person calling such a telephone number is charged a fixed amount of money per time unit, that he is connected to the service providing arrangement. This amount of money is billed on the monthly or two-monthly bill, that this person receives from the network operator. The proprietor of the service providing arrangement receives a part of this money from the network operator.

Such a telecommunication network is known from EP 491497. Here a call billing method is used when an ISDN connection is established between user terminal and a called location via the telecommunication network which enables the called location to specify call billing information to the telecommunication network on a call by call basis. The method provides the called party real time access to network rate tables to specify call billing parameters needed to generate a separate billing record for each call made to the called location. Other features enable the caller or called location to provide various types of information for call billing purposes. Caller charges may be changed in real time during the call and may vary depending on the call type, time-of-day, geographic location etc. The billing information may identify the type of call being billed which may vary in accordance with the selection of services by the caller. If the caller selects more than one service the billing record may require separate fields to store billing parameters for each service or feature selected by the caller.

It is an object of the present invention to provide a telecommunication network, in which the connection charge for a connection to the service providing arrangement with which the connection charge is established in a flexible way.

To obtain this object a telecommunication network according to the present invention is characterized in that, the billing arrangement is arranged for changing the connection charge in dependence on a content of services selected by a user of the terminal during the connection. The service providing arrangement is arranged to transmit information regarding the services selected by a user of a terminal connectable to the telecommunication network, to a billing arrangement present in the telecommunication network in order to let the billing arrangement change a connection charge in dependence on a content of services selected by a user of the terminal during a connection. A user during the connection has the possibility to select services according to his own wishes. The price of the services may vary, whereby "interesting" or "valuable" services, selected during the connection are made more expensive than other services.

In the European Patent Application EP 0 452 591 a telecommunication network is disclosed, in which the proprietor of the service providing arrangement can change the charges for a connection. However, it is not disclosed that the charges are changed in dependence on the services selected by the user, as in the telecommunication network according to the present invention.

An embodiment of the telecommunication network according to the invention is characterized in that, the billing arrangement is arranged to change the connection charge rate per time unit in dependence on the content of the services selected during the connection. The billing arrangement in current public telephony networks charges the caller a fixed charge rate per time unit for having a connection. Changing this rate in dependence on the selected services makes, that the billing arrangement needs to be only slightly adapted with respect to the billing arrangement used in known public telephony networks.

A further embodiment of the telecommunication network according to the invention is characterized in that, the services provided by the service providing arrangement are video games. Especially for many young people video games are very interesting services.

A further embodiment of the telecommunication network according to the invention is characterized in that, the billing arrangement is arranged for establishing a lower connection charge, when general information about the video games or a demonstration of the video games is offered and a higher connection charge, when the video games are played on-line. So, a user can get a first impression of a game to be played cheaply, while having to pay more for playing the game on-line.

A further embodiment of the telecommunication network according to the invention is characterized in that, the service providing arrangement is arranged to down load the video games and in that the billing arrangement is arranged to establish a high connection charge therefor. This makes it possible that the user obtains the video games for a relatively high price but that he can play them in the future without having to have a connection with the service providing arrangement.

A further embodiment of the telecommunication network according to the invention is characterized in that, the billing arrangement is arranged to decrease the connection charge, when the level on which the video games are played increases. This will stimulate the user to play the video games at his best.

A further embodiment of the telecommunication network according to the invention is characterized in that, the service providing arrangement is arranged to offer the services over a CATV-network. CATV-networks offer a wider bandwidth than the current public telephony network. So, this makes it possible to provide more beautiful graphics and more sophisticated video games than would be possible over the current public telephony network.

The invention further relates to a method for establishing a connection charge, to a billing arrangement for use in a telecommunication network and to service providing arrangement for use in a telecommunication network.

The present invention will become more clear in conjunction with the accompanying figures of which:
figure 1 shows a telecommunication network in which the service providing arrangement is arranged to offer services over a CATV-network,
figure 2 shows a telecommunication network in which the service providing arrangement is arranged to offer services over the telecommunication network itself,
figure 3 shows a first embodiment of the billing arrangement of the telecommunication network according to the present invention in detail and
figure 4 shows a second embodiment of the billing arrangement of the telecommunication network according to the present invention in detail and
figure 5 shows in a flow chart the possible selections which a user can make, when the offered services are video games.

Throughout the drawings similar reference signs denote similar parts.

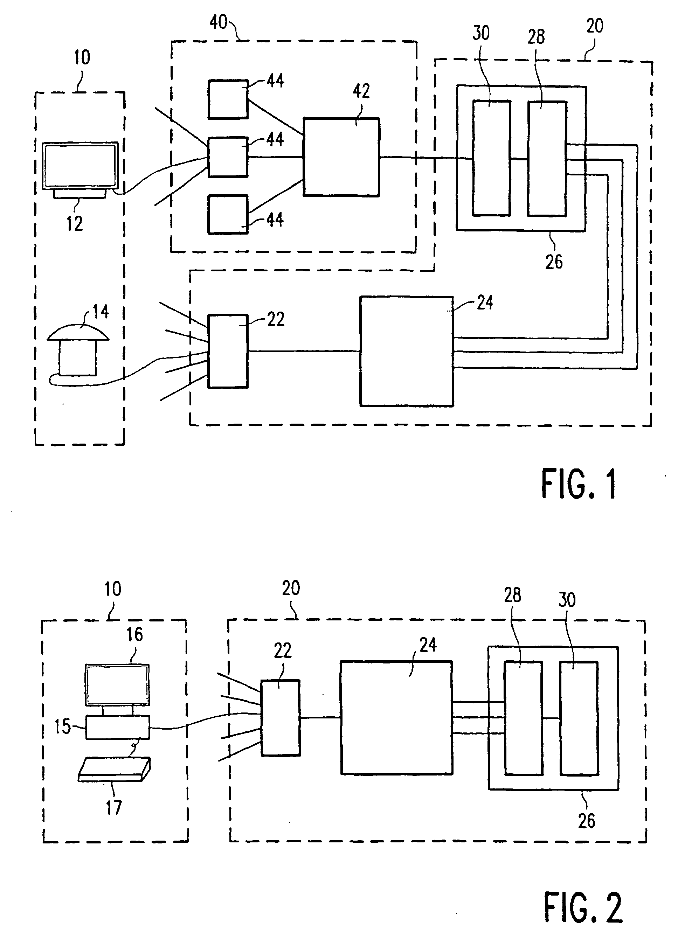

Figure 1 shows a user's home 10, a telecommunication network 20 and a CATV-network 40. In the user's home 10 a television set 12 and a terminal, here being a normal telephone set 14, are present. The telecommunication network 20 comprises a local exchange 22 and a special service exchange 24 to which a service providing arrangement 26 is connected. Between the service exchange and the service providing arrangement, various telephone lines are arranged, so that the service providing arrangement can be called by several users at the same time. To the service exchange a large number of service providing arrangements, reachable via different telephone numbers can be connected. For convenience only one of the service providing arrangements is shown in the figure. Between the local exchange 22 and the service exchange 24 one or more trunk exchanges can be arranged (not shown). The CATV-network comprises a head-end 42 and a number of local nodes 44. The television set 12 is connected to one of the local nodes 44 of the CATV-network. The telephone set 14 is connected to the local exchange 22 of the telecommunication network 20. The service providing arrangement 26 comprises processing means 28 connected to the service exchange 24 and memory means 30 connected to the head end 42 of the CATV-network 40.

A user can get access to the services as follows. He dials the telephone number belonging to the service providing arrangement 26 using the telephone set 14. The service providing arrangement 26 announces a number of a TV-channel, which the user should select in order to be able to obtain the service. In response to announcements, which can be sent to the user over the CATV-channel or over the telecommunication network, the user can select the services, he wishes to obtain. He does this using the digit buttons of the telephone set 14. The DTMF-tones belonging to these digits are received by the processing means 28 of the service providing arrangement 26. The processing means take from the memory 30 the data belonging to the selected service, which is transferred to the TV set 12 of the user using the TV-channel.

In sophisticated CATV-networks, in which it is possible to send information to a specific user only, the value added services are sent to the user having the connection via his telephone to the service providing arrangement. In less sophisticated CATV-networks this is not possible and therefore other people can see the services sent via the TV-charinel, also. However, only the user having the connection via his telephone to the service providing arrangement is able to select services and, when the service is a video game, is able to play this video game.

Figure 2 shows a configuration in which the user has a PC-set consisting of a computer 15 having a modem, a screen 16 and a key board 17. The computer is connected to the local exchange 22. In the configuration of figure 2 the service providing arrangement 26 is arranged to supply the value added services to the user over the telecommunication network using the telephone connection existing between the user and the service providing arrangement. With this configuration it is possible to select the service using the keys of the keyboard.

The service providing arrangement can offer added value services of all kinds. Examples are on-line database services, in which the user can look for information he wants to have about a certain subject, or video games. The charge rate per time unit is changed in dependence on the content of the services, which the user selects. In the database service, the charge rate when information of a general kind is selected by the user is lower than when the user selects very specific valuable information. In the case of a video game the charge rate is made low, when the user selects a mode in which the video game is demonstrated. When the user selects a mode in which the video game is to be played on line, the charge rate is increased. When the user selects the mode in which the video game is down loaded, the rate is further increased. In the configuration of figure 1 the user uses the digit buttons on his telephone set to play the video game. In the configuration of figure 2 the keys of the keyboard are used therefor.

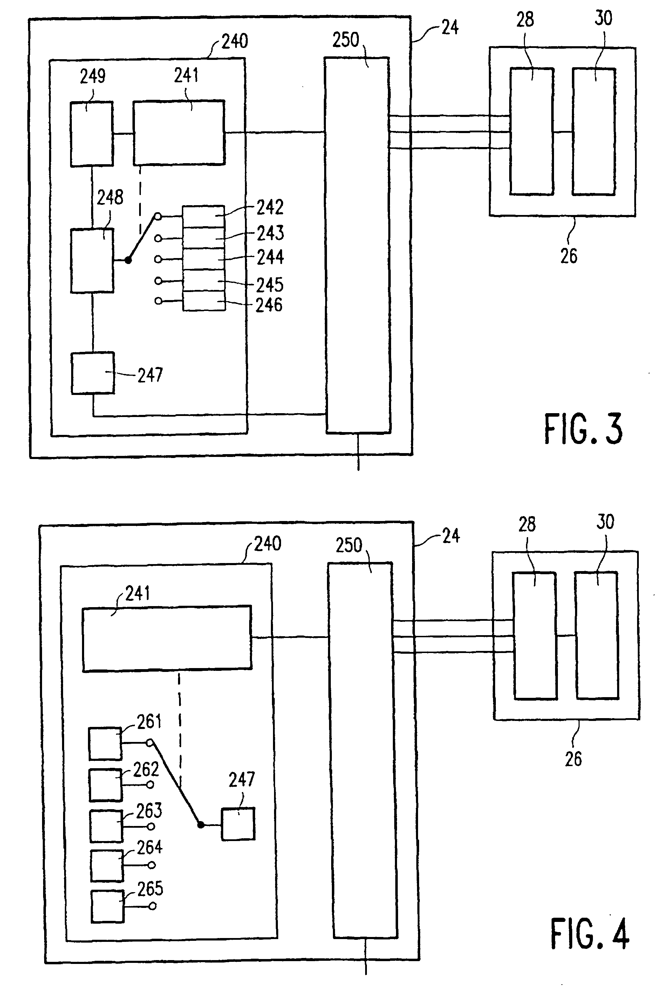

Figure 3 shows a first embodiment of the service exchange in detail. The exchange comprises a switch 250 arranged in a well known way and a billing arrangement 240. The billing arrangement comprises control means 241, registers 242,243,244,245,246, a counter 247, a programmable frequency divider 248 and a clock 249. In each register a different integer has been stored. The processing means 28 send a signal to the service exchange 24, which indicates the charge rate, which the billing arrangement should establish. This signal can be sent, using for example out-of-band-signalling. In reaction to this signal the control means 241 switch the appropriate register to the programmable frequency divider 248. The clock 249 generates clock pulses with a certain frequency. The programmable frequency divider generates pulses with a frequency, which is equal to the clock frequency divided by the integer which has been stored in the register connected to the programmable frequency divider. The counter 247 counts the total number of clock pulses generated by the programmable frequency divider 248. Each pulse represents a fixed charge. The total charge for the connection is equal to the total amount of pulses counted by the counter during the connection multiplied with the fixed charge. For each telephone line to the service providing means a separate programmable frequency divider, separate registers and a separate counter are present. For convenience only the registers 242,243,244,245,246, the programmable frequency divider 248 and the counter 247 belonging to one telephone line are shown.

So, by switching different registers, in which different integers have been stored, to the programmable frequency divider the frequency, at which pulses are counted by the counter, can be varied. This makes, that also the charge rate per time unit is varied. When the charge rate has to be made high, a register, in which a small integer has been stored, should be connected to the programmable frequency divider. When the charge rate is to be made low, a register in which a high integer has been stored, should be connected to the programmable frequency divider. When a connection should be free of charge the control means 241 inhibit the clock 249 to generate pulses, so that the amount of pulses counted by the counter 247 is not increased.

The service providing arrangement 26, when the user selects a certain service, sends a signal to the control means 241 indicating the charge rate to be taken. In reaction thereto the control means switches a register to the programmable frequency divider 248, in which an integer has been stored, leading to a charge rate belonging to the selected service. When the user during the connection selects another service to which a different charge rate belongs, a signal indicating the charge rate belonging thereto is sent from the service providing arrangement to the billing arrangement. The control means then switches another register belonging to this different charge rate to the programmable frequency divider.

Figure 4 shows a second embodiment of the service exchange in detail. The billing means 240 comprises control means 241, clocks 261,262,263.264,265 each generating pulses at a different frequency and a counter 247 for counting the pulses coming from the clocks. The control means 241 are arranged to switch the appropriate clock to the counter 247 in dependence on the signal received from the service providing means, indicating the charge rate to be established. For each telephone line to the service providing means a separate counter is used. For convenience only one counter is shown.

So, by switching different clocks generating pulses at different frequencies to the counter, the frequency, at which pulses are counted by the counter, can be varied. This makes, that also the charge rate per time unit is varied. When the charge rate has to be made high, a clock generating pulses at a high frequency should be connected to the counter. When the charge rate is to be made low, a clock generating pulses at a low frequency should be connected to the counter.

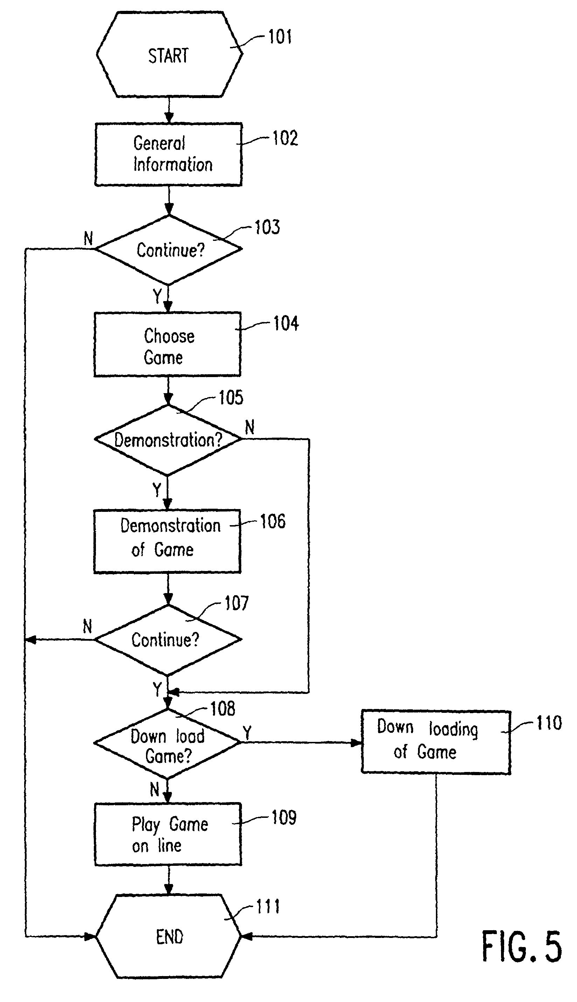

In figure 5 a flow chart is shown, which indicates the different selections, that can be made by a user in case that video games are offered. The meaning of the shown blocks is as follows:

| BLOCK: | MEANING: |
|---|---|
| 101 | Start |
| 102 | General information about the video games is given |
| 103 | Continue? |
| 104 | Choose a video game |
| 105 | Do you want a demonstration of the chosen video game? |
| 106 | A demonstration of the video game is given |
| 107 | Continue? |
| 108 | Do you want the video game to be down loaded? |
| 109 | Play the game on-line |
| 110 | Down-loading of the video game |
| 111 | End |

When the user calls the number of the service providing arrangement, first general information about the video games offered by the service providing arrangement is given. During this time the connection is free of charge or the charge rate is low. When the user indicates that he wants to continue, he must choose a video game. If the user chooses to have a demonstration of the game first, a demonstration of the game is given. During this time the charge rate is still low. After the demonstration, the user must indicate if he wants to continue. If he wants to, he must indicate if he wants to play the game on-line or if he wants to have the game being down loaded. If the latter option is chosen, the user should have a TV equipped with a memory in order to receive the data of the video game. In the configuration of figure 2 the data of the video game is stored in the memory of the computer. If the user indicates, that he wants to play the game on-line the charge rate is increased. When the user plays the video game very well and reaches a high level, the charge rate is decreased again. This will stimulate the user to play the game as well as possible. If the user chooses the possibility of down loading the game, the charge rate is made even higher than in the case, that the game is played on-line.

The total charge for the connection is added to the bill which the user gets every month or two months from the telephone company. The telephone company pays a part of the total charges to the proprietor of the service providing arrangement, the exact amount thereof being dependent on the services selected by the user during the connection.

The embodiments of the present invention described herein are intended to be taken in an illustrative and not a limiting sense. Various modifications may be made to these embodiments by persons skilled in the art without departing from the scope of the present invention as defined in the claims.

## Claims

1. A service providing arrangement (26) to be used in a telecommunication network (20) and arranged for providing services, **characterized in that** the service providing arrangement (26) is arranged to transmit information regarding the services selected by a user of a terminal (12) connectable to the telecommunication network (20), to a billing arrangement (240) present in the telecommunication network (20) in order to let the billing arrangement (240) change a connection charge in dependence on a content of services selected by a user of the terminal (12) during a connection.

2. A telecommunication network (20) comprising a service providing arrangement (26) as claimed in claim 1 and a billing arrangement (240) for establishing a connection charge to be paid to a network operator of the telecommunication network (20)

3. A telecommunication network (20) as claimed in claim 2, **characterized in that**, the billing arrangement (240) is arranged to change the connection charge rate per time unit in dependence on the content of the services selected during the connection.

4. A telecommunication network (20) as claimed in claim 2 or 3, **characterized in that**, the services provided by the service providing arrangement (26) are video games.

5. A telecommunication network (20) as claimed in claim 4, **characterized in that**, the billing arrangement (240) is arranged for establishing a lower connection charge, when general information about the video games or a demonstration of the video games is offered and a higher connection charge when the video games are played on-line.

6. A telecommunication network (20) as claimed in claim 4 or 5, **characterized in that**, the service providing arrangement (26) is arranged to down load the video games and **in that** the billing arrangement (240) is arranged to establish a high connection charge therefor.

7. A telecommunication network (20) as claimed in claim 4, 5 or 6 **characterized in that**, the billing arrangement (240) is arranged to decrease the connection charge, when the level on which the video games are played, increases.

8. A telecommunication network (20) as claimed in any one of the preceding claims **characterized in that**, the service providing arrangement (26) is arranged to offer the services over a CATV-network (40).

9. Billing arrangement (240) to be used in a telecommunication network (20), the telecommunication network (20) comprising a service providing arrangement (26) for providing services, whereby the billing arrangement (240) is arranged for establishing a connection charge to be paid to an operator of the telecommunication network (20) for a connection between a terminal (12) connectable to the telecommunication network (20) and the service providing arrangement (26) **characterized in that**, the billing arrangement (240) is arranged for changing the connection charge in dependence on a content of services selected by a user of the terminal (12) during the connection.

10. Method for establishing a connection charge to be paid to a network operator of a telecommunication network (20) for a connection between a terminal (12), which is connectable to the telecommunication network (20), and a service providing arrangement (26), providing services, **characterized in that**, the connection charge is changed in dependence on a content of services, being selected by a user of the terminal (12) during the connection.

## Patentansprüche

1. Dienstleistungsanordnung (26) zur Verwendung in einem Telekommunikationsnetzwerk (20) und vorgesehen zum Liefern von Diensten, **dadurch gekennzeichnet, dass** die Dienstleistungsanordnung (26) vorgesehen ist zum Übertragen von Information in Bezug auf die Dienste, die von einem Benutzer eines Endgeräts (12) selektiert werden, das mit dem Telekommunikationsnetzwerk (20), mit einer Gebührenerfassungsanordnung (240) in dem Telekommunikationsnetzwerk (20) verbindbar ist, damit die Gebührenerfassungsanordnung (240) in Abhängigkeit von dem Inhalt der von einem Benutzer des Endgeräts (12) während einer Verbindung selektierten Dienste die Verbindungsgebühren ändern kann.

2. Telekommunikationsnetzwerk (20) mit einer Dienstleistungsanordnung (26) nach Anspruch 1 und mit einer Gebührenerfassungsanordnung (240) zum Aufbauen einem Netzbetreiber des Telekommunikationsnetzwerkes (20) zu bezahlender Verbindungsgebühren.

3. Telekommunikationsnetzwerk (20) nach Anspruch 2, **dadurch gekennzeichnet, dass** die Gebührenerfassungsanordnung (240) dazu vorgesehen ist, in Abhängigkeit von dem Inhalt der während der Verbindung selektierten Dienste, die Verbindungsgebührenrate je Zeiteinheit zu ändern.

4. Telekommunikationsnetzwerk (20) nach Anspruch 2 oder 3, **dadurch gekennzeichnet, dass** die von der Dienstleistungsanordnung (26) gelieferten Dienste Videospiele sind.

5. Telekommunikationsnetzwerk (20) nach Anspruch 4, **dadurch gekennzeichnet, dass** die Gebührenerfassungsanordnung (240) dazu vorgesehen ist, niedrigere Verbindungsgebühren aufzubauen, wenn allgemeine Information über die Videospiele oder eine Demonstration der Videospiele angeboten wird, und höhere Verbindungsgebühren, wenn die Videospiele On-Line gespielt werden.

6. Telekommunikationsnetzwerk (20) nach Anspruch 4 oder 5, **dadurch gekennzeichnet, dass** die Dienstleistungsanordnung (26) dazu vorgesehen ist, die Videospiele herunter zu laden und dass die Gebührenerfassungsanordnung (240) dazu vorgesehen ist, dafür hohe Verbindungsgebühren aufzubauen.

7. Telekommunikationsnetzwerk (20) nach Anspruch 4, 5 oder 6, **dadurch gekennzeichnet, dass** die Gebührenerfassungsanordnung (240) dazu vorgesehen ist, die Verbindungsgebühren zu erniedrigen, wenn der Pegel, auf dem die Videospiele gespielt werden, zunimmt.

8. Telekommunikationsnetzwerk (20) nach einem der vorstehenden Ansprüche, **dadurch gekennzeichnet, dass** die Dienstleistungsanordnung (26) dazu vorgesehen ist, die Dienste über ein CATV-Netzwerk (40) anzubieten.

9. Gebührenerfassungsanordnung (240) zur Verwendung in einem Telekommunikationsnetzwerk (20), wobei das Telekommunikationsnetzwerk (20) eine Dienstleistungsanordnung (26) zum Liefern von Diensten aufweist, wobei die Gebührenerfassungsanordnung (240) dazu vorgesehen ist, einem Betreiber des Telekommunikationsnetzwerkes (20) für eine Verbindung zwischen einem Endgerät (12), das mit dem Telekommunikationsnetzwerk (20) verbindbar ist, und der Dienstleistungsanordnung (26) zu bezahlende Verbindungsgebühren aufzubauen, **dadurch gekennzeichnet, dass** die Gebührenerfassungsanordnung (240) dazu vorgesehen ist, in Abhängigkeit von dem Inhalt der von einem Benutzer des Endgeräts (12) während der Verbindung selektierten Dienste, die Verbindungsgebühren zu ändern.

10. Verfahren zum Aufbauen von Verbindungsgebühren, die einem Netzwerkbetreiber eines Telekommunikationsnetzwerkes (20) für eine Verbindung zwischen einem Endgerät (12), das mit dem Telekommunikationsnetzwerk (20) verbindbar ist, und einer Dienstleistungsanordnung (26), die Dienste liefert, bezahlt werden sollen, **dadurch gekennzeichnet, dass** die Verbindungsgebühren in Abhängigkeit von dem Inhalt der Dienste, die von einem Benutzer des Endgeräts (12) während der Verbindung selektiert werden, geändert werden.

## Revendications

1. Dispositif de prestation de services (26) à utiliser dans un réseau de télécommunications (20) et étant agencé de manière à fournir des services, **caractérisé en ce que** le dispositif de prestation de services (26) est agencé de manière à transmettre des informations relatives aux services étant sélectionnés par un utilisateur d'un terminal (12) qui peut être connecté au réseau de communications (20) à un dispositif de facturation (240) étant présent dans le réseau de télécommunications (20) afin de permettre au dispositif de facturation (240) de changer un tarif de connexion dépendamment d'un contenu de services qui sont sélectionnés par un utilisateur du terminal (12) pendant une connexion.

2. Réseau de télécommunications (20) comprenant un dispositif de prestation de services (26) selon la revendication 1 et un dispositif de facturation (240) pour établir un tarif de connexion à payer à un opérateur de réseau du réseau de télécommunications (20).

3. Réseau de télécommunications (20) selon la revendication 2, **caractérisé en ce que** le dispositif de facturation (240) est agencé de manière à changer le tarif de connexion par unité de temps dépendamment du contenu des services qui sont sélectionnés pendant la connexion.

4. Réseau de télécommunications (20) selon la revendication 2 ou 3, **caractérisé en ce que** les services qui sont fournis par le dispositif de prestation de services (26) sont des jeux vidéo.

5. Réseau de télécommunications (20) selon la revendication 4, **caractérisé en ce que** le dispositif de facturation (240) est agencé de manière à établir un tarif de connexion plus réduit lorsque des informations générales relatives aux jeux vidéo ou à une démonstration des jeux vidéo sont offertes et un tarif de connexion plus élevé lorsque les jeux vidéo sont joués en ligne.

6. Réseau de télécommunications (20) selon la revendication 4 ou 5, **caractérisé en ce que** le dispositif de prestation de services (26) est agencé de manière à télécharger les jeux vidéo et **en ce que** le dispositif de facturation (240) est agencé de manière à établir à cette fin un tarif de connexion élevé.

7. Réseau de télécommunications (20) selon la revendication 4, 5 ou 6, **caractérisé en ce que** le dispositif de facturation (240) est agencé de manière à diminuer le tarif de connexion lorsque le niveau auquel les jeux vidéo sont joués va en augmentant.

8. Réseau de télécommunications (20) selon l'une quelconque des revendications précédentes 1 à 7, **caractérisé en ce que** le dispositif de prestation de services (26) est agencé de manière à offrir les services par le biais d'un réseau de télévision à antenne collective (40).

9. Dispositif de facturation (240) à utiliser dans un réseau de télécommunications (20), le réseau de télécommunications (20) comprenant un dispositif de prestation de services (26) pour fournir des services, cas dans lequel le dispositif de facturation (240) est agencé de manière à établir un tarif de connexion à payer à un opérateur du réseau de télécommunications (20) pour une connexion entre un terminal (12) qui peut être connecté au réseau de télécommunications (20) et le dispositif de prestation de services (26), **caractérisé en ce que** le dispositif de facturation (240) est agencé de manière à changer le tarif de connexion dépendamment d'un contenu de services qui sont sélectionnés par un utilisateur du terminal (12) pendant la connexion.

10. Procédé pour établir un tarif de connexion à payer à un opérateur de réseau d'un réseau de télécommunications (20) pour une connexion entre un terminal (12) qui peut être connecté au réseau de télécommunications et un dispositif de prestation de services (26) fournissant des services, **caractérisé en ce que** le tarif de connexion est changé dépendamment d'un contenu de services qui sont sélectionnés par un utilisateur du terminal (12) pendant la connexion.
